# EUROPÄISCHE PATENTSCHRIFT

(11) **EP 3 050 860 B1**
(45) Veröffentlichungstag und Bekanntmachung des Hinweises auf die Patenterteilung: **03.03.2021**
(21) Anmeldenummer: 16150963.3
(22) Anmeldetag: 12.01.2016
(51) Int. Cl.: C04B 28/02, C04B 28/04, C04B 111/00

(54) **ERDLEITUNGS-BETTUNGSMATERIAL UND ERDLEITUNGSBEREICH**
EARTH LINE BEDDING MATERIAL AND EARTH LINE SECTION
MATÉRIAU POUR MISE EN TERRE UNE GESTION DE TERRE ET ZONE D'UNE GESTION DE TERRE

(30) Priorität: 29.01.2015 DE 102015101342
(43) Veröffentlichungstag der Anmeldung: 03.08.2016
(73) Patentinhaber: Universität Kassel, 34125 Kassel (DE)
(72) Erfinder: Simon, Jana, 34121 Kassel (DE); Middendorf, Bernhard, Professor Dr., 34379 Calden (DE)
(74) Vertreter: REHBERG HÜPPE + PARTNER

(56) Entgegenhaltungen:
- EP-A1- 1 364 926
- WO-A2-2008/048717
- WO-A2-2012/127064
- AT-A1- 509 403
- DE-A1- 10 325 864
- DE-A1- 19 929 697
- DE-T2- 69 607 105
- FR-A1- 2 980 189
- GB-A- 2 049 919
- US-A- 3 719 511
- US-A- 4 050 258
- US-A- 4 361 661
- US-A- 5 294 255
- US-A1- 2002 056 404
- US-A1- 2002 162 484
- US-A1- 2005 166 802
- US-B1- 6 251 179
- RADHAKRISHNA ET AL: "Fluidized cable thermal backfill, underground cable thermal backfill", UNDERGROUND CABLE THERMAL BACKFILL PROCEEDINGS OF THE SYMPOSIUM ON UNDERGROUND CABLE THERMAL BACKFILL, HELD IN TORONTO, CANADA, SEPTEMBER 17 AND 18, 1981, TORONTO : PERGAMON PR., 1982, CA, 1. Januar 1982 (1982-01-01), Seiten 34-53, XP008180441, DOI: 10.1016/B978-0-08-025387-9.50008-7 [gefunden am 2013-11-17]
- Logic Schweiz: "Erdverlegte Hochspannungsleitungen Bettung in RSS Flüssigboden", Technisches Merkblatt Flüssigboden, 3 November 2011 (2011-11-03), XP055626288, Retrieved from the Internet: URL:http://www.hsub.ch/Doc/Fluessigboden%2 0RSS.pdf [retrieved on 2019-09-25]
- Anonymous: "Flüssigboden - Wikipedia", , 28 September 2010 (2010-09-28), XP055626290, Retrieved from the Internet: URL:https://de.wikipedia.org/wiki/Flüssigb oden [retrieved on 2019-09-25]
- ANONYMOUS: "Mit Flüssigboden: Erdkabel thermisch stabilisieren - ABZ", ALLGEMEINE BAUZEITUNG, no. 38/2015, 22 September 2015 (2015-09-22), XP055626291,
- Lukas Romanowski ET AL: "Zeitweise fliessfähige selbstverdichtende Verfüllbaustoffe (ZFSV). Eine Bestandsaufnahme", Infopoint Technik, 18 October 2014 (2014-10-18), pages 1-4, XP055625978, Retrieved from the Internet: URL:http://www.rohrleitungsbauverband.de/i mages/pdf/infopoints/2013-zfsv.pdf [retrieved on 2019-09-25]
- FORSCHUNGSGESELLSCHAFT FÜR STRASSEN-UND VERKEHRSWESEN ARBEITSGRUPPE ERD-UND GRUNDBAU: "Hinweise für die Herstellung und Verwendung von zeitweise fließfähigen, selbstverdichtenden Verfüllbaustoffen im Erdbau : H ZFSV / Forschungsgesellschaft für Straßen- und Verkehrswesen, Arbeitsgruppe Erd- und Grundbau", 1 January 2012 (2012-01-01), FORSCHUNGSGESELLSCHAFT FÜR STRASSEN- UND VERKEHRSWESEN ARBEITSGRUPPE ERD- UND GRUNDBAU, KÖLN : FGSV-VERL, DE, PAGE(S) 1 - 36, XP009516306, ISBN: 978-3-86446-033-3 * the whole document * * paragraph [6.4.3] *
- MITCHELL J K ABDEL-HADI O N ET AL: "Backfill materials for underground power cables : phase II: Backfill treatments, heat and moisture flow analyses, and field tests ; interim report", EPRI INTERIM REPORT, EPRI - ELECTRIC POWER RESEARCH INSTITUTE, US, vol. EPRI EL-1894, no. Project 7841-2, 1 June 1981 (1981-06-01), pages 1-289, XP009516263,
- Michael Webeling ET AL: "Hinweise für die Herstellung und Verwendung von zeitweise fließfähigen, selbstverdichtenden Verfiillbaustoffen im Erdbau /Passage/" In: "Hinweise für die Herstellung und Verwendung von zeitweise fließfähigen, selbstverdichtenden Verfiillbaustoffen im Erdbau", 1 January 2012 (2012-01-01), FGSV Verlag, XP055708717, pages 3PP, 3-36, * the whole document *
- ANONYMOUS: "Gesteinskornungen fur Normalbeton", ZEMENT-MERKBLATT BETONTECHNIK, 1 January 2012 (2012-01-01), pages 1-12, XP055708720,
- Robert Weber ET AL: "Kies und Sand fur Beton /Passage/" In: "Kies und Sand fur Beton", 1 January 2003 (2003-01-01), Verlag Bau + Technik, XP055708729, pages 3pp, 5, 7, 28-43, * the whole document *
- RAYMOND BÖING: "Improving heat dissipation in high and extra-high voltage transmission lines using concretes with high thermal conductivity", BFT INTERNATIONAL, vol. 78, 1 February 2012 (2012-02-01), pages 1pp, 22-24, XP055708734,
- HEINRICH BRAKELMANN ET AL: "Powercrete und CableCem - technische und wirtschaftliche Perspektiven", EW - DAS MAGAZIN FUR DIE ENERGIE WIRTSCHAFT, vol. 15-16, 1 January 2011 (2011-01-01), pages 3-10, XP055707830,
- RAYMUND BÖING ET AL: "Verbesserung der Wärmeableitung bei Hoch- und Höchstspannungskabeln", 18.FORUM NETZBAU-UND BETRIEB 6. UND 7. MAI 2010- ZUSAMMENFASSUNG DES VORTRAGS, 1 January 2010 (2010-01-01), pages 1-22, XP055708742,
- ANONYMOUS: "Technisches Datenblatt POWERCRETE Hochwärmeleitfähiger Beton", HEIDELBERGER BETON GMBH, 1 November 2010 (2010-11-01), page 2pp, XP055708746,
- UWE LEPRICH ET AL: "Ausbau elektrischer Netze mit Kabel oder Freileitung unter besonderer Berücksichtigung der Einspeisung Erneuerbarer Energien - Eine Studie im Auftrag des Bundesministeriums für Umwelt, Naturschutz und Reaktorsicherheit", IZESG GMBH, 20 June 2011 (2011-06-20), pages I-IV, 22-23, XP055708750,
- ANONYMOUS: "DIN 18196:2011-05 Erd- und Grundbau - Bodenklassifikation für bautechnische Zwecke [Earthworks and foundations - Soil classification for civil engineering purposes]", DIN NORM, BEUTH, DE, 1 May 2011 (2011-05-01), pages 95-107, XP009520592, DOI: 10.31030/1754896

## Beschreibung

### TECHNISCHES GEBIET DER ERFINDUNG

Derzeit wird eine Reduzierung von CO₂-ausstoßenden Kohle- und Gaskraftwerken angestrebt. Auch der Ausstieg aus der Atomenergie hat in Deutschland zu einer rasanten Energiewende mit einem Schwerpunkt auf erneuerbaren Energien geführt. Allerdings wird der Strom aus erneuerbaren Energiequellen überwiegend in Gebieten erzeugt, welche entfernt von den Verbrauchern der Energie angeordnet sind. So kann beispielsweise die Stromerzeugung im Bereich einer Offshore-Anlage erfolgen mit Nutzung des Stroms durch einen in Süddeutschland angeordneten Verbraucher. Demgemäß ist eine Beförderung des Stroms über u. U. weite Strecken erforderlich. Schließlich führt eine Spezialisierung auf regenerative Energien zu lokal ungleichmäßigen, wetterbedingten Energieschwankungen, die ausgeglichen werden müssen. Die bestehenden Netze sind allerdings für die vorgenannten Zwecke nicht ausreichend, so dass ein Ausbau existierender Netze und die Schaffung neuer Netze erfolgt. Hohe Widerstände der Bevölkerung führen dabei aufgrund höherer Landschaftsbeeinträchtigungen und Umweltbelastungen durch Freileitungen immer mehr zu einem Umdenken und (trotz der erhöhten Kosten von erdverlegten Kabeltrassen) zu einer Förderung der erdverlegten Kabeltrassen auch außerhalb besiedelter Gebiete.

Die Erfindung betrifft ein Erdleitungs-Bettungsmaterial, welches der Einbettung einer Leitung im Erdreich dient. Hierbei wird im Rahmen der Erfindung unter einer Leitung insbesondere ein fluidführendes Rohr oder ein elektrisches Kabel bzw. Kabelsystem verstanden. Im Rahmen der vorliegenden Anmeldung wird aber vorrangig auf ein Kabel Bezug genommen, ohne dass eine Einschränkung der Erfindung auf ein Kabel erfolgen soll. Des Weiteren betrifft die Erfindung einen Erdleitungsbereich, in welchem eine Erdleitung in ein Erdleitungs-Bettungsmaterial eingebettet ist.

### STAND DER TECHNIK

Erdleitungen werden üblicherweise in Aushubkanälen (Leitungsgraben, Kabelgraben, Rohrgraben, Graben usw.) verlegt, wobei in dem Aushubkanal die Erdleitungen in ein besonderes Bettungsmaterial eingebettet werden sollten.

Grundsätzlich sind konventionelle Flüssigböden oder zeitweise fließfähige selbstverdichtende Verfüllbaustoffe (im Folgenden auch als "ZFSV" abgekürzt) aus den Druckschriften DE 10 2008 050 175 A1, DE 103 02 772 B4, DE 10 2004 023 482 B4, DE 10 2005 056 568 B4 oder DE 10 2010 029 381 A1 bekannt. Compounds für Flüssigböden und einzelne Baustoffgemische oder-zusammensetzungen sind in DE 10 2005 011 266 B4 und DE 10 2008 025 970 A1 offenbart. Die Druckschriften DE 10 2004 039 107 A1, DE 10 2011 108 821 A1, DE 199 58 765 A1, DE 199 64 341 B4 widmen sich einem Wärmeabtransport bei Erdkabeln, Erdkollektoren oder Erdsonden, wozu überwiegend graphithaltige Betone gemäß DIN 1045-2 / DIN EN 206-1 mit Leitfähigkeiten bis zu 3 W/(mK) Einsatz finden.

Die nicht gattungsgemäße Druckschrift FR 2 980 189 A1 betrifft einen Mörtel, der einen besonders guten Wärmetransfer ermöglichen soll. Als Anwendungszwecke eines derartigen Mörtels wird die Nutzung von Erdwärme in Verbindung mit Wärmepumpen genannt. Für die Herstellung des Mörtels erfolgt ein Recycling von feuerfesten Steinen, nämlich Ziegel, die aus einer Mischung aus Aluminiumoxid (Korund), Spinell (eine mineralische Verbindung aus Aluminiumoxid und Magnesiumoxid) und Kohlenstoff in Form von Graphit (7 bis 10 %) hergestellt sind. Diese Ziegel werden zerkleinert und in verschiedene Fraktionen verschiedener Partikelgrößen sortiert. Zur Erhöhung der Wärmeleitfähigkeit des Mörtels sollen vorzugsweise Partikelgrößen der Klasse von 0 bis 1 mm verwendet werden. Der Mörtel soll dann eine Wärmeleitfähigkeit von 2 W/mK aufweisen. Durch Zusatz organischer Additive soll die Fließfähigkeit erhöht werden und die Stabilität und Homogenität des trockenen Materials erhöht werden. Der Mörtel soll pumpbar sein und eine besonders gute Homogenität aufweisen. Ein weiterer Anwendungszweck ist eine Beschichtung von Erdsonden in einer Erdbohrung.

Die nicht gattungsgemäße Druckschrift DE 103 25 864 A1 betrifft ein mineralisches Lockergestein oder ähnlich geartete technische Anfallstoffe wie recycelte Baumaterialien, die u. a. für den Einsatz für Umhüllungen von Rohrleitungen und Kanälen bestimmt sind. DE 103 25 864 A1 beschäftigt sich mit der Weiterentwicklung eines Verfahrens zum Verfestigen der mineralischen Lockergesteine oder Anfallstoffe, der Reduzierung einer Wasserdurchlässigkeit gegenüber einer bekannten Verflüssigung mit Tonmaterialien zur Herbeiführung einer Feuchtesperrwirkung zwecks Reduzierung einer Beeinflussung einer Grundwasserströmung. DE 103 25 864 A1 schlägt vor, zunächst ausgehend von dem mineralischen Lockergestein oder dem technischen Anfallstoff eine Suspension bestehend aus Zellulose, nämlich Zellulosepulver und Wasser zu bilden. Diese Suspension soll dann mit dem genannten Lockergestein und den Anfallstoffen vermischt werden mit Zugabe eines Bindemittels zum Zweck des Aushärtens und Verfestigens der gesamten Mischung am Verbringungs- oder Füllort. Als Bindemittel kann ein anorganisches Bindemittel eingesetzt werden. Die Suspension kann 10 Gramm bis 100 Gramm Zellulose oder Zellulosepulver auf je 1 Liter Wasser enthalten. In Abhängigkeit von der Korngrößenverteilung des Lockergesteins oder des Anfallstoffs soll in diesem im Wesentlichen 10 bis 35 Massenprozent Zellulosesuspension und im Wesentlichen 1 bis 15 Massenprozent Bindemittel bezogen auf das Lockergestein oder den Anfallstoff zugegeben werden. Eine Beeinflussung einer Endfestigkeit je nach Verwendungszweck soll durch Gestaltung der Suspension und Zugabe des Bindemittels erfolgen. Als anorganische, hydraulische Bindemittel soll Zement, Kalk oder ein Gemisch aus Zement und Flugasche oder Kalk und Flugasche eingesetzt werden. Ein Abbindebeschleuniger oder -verzögerer kann zur Beeinflussung des Erhärtungsverhaltens zugegeben werden. Ein Fließmittel kann zur Beeinflussung des Fließverhaltens oder ein Luftporenbildner zur Beeinflussung der Frost-Tau-Beständigkeit zugegeben werden. Durch einen mineralischen Baustoff kann die Packungsdichte und das Fließverhalten des Gemisches eingestellt werden. Letztendlich soll gemäß DE 103 25 864 A1 der Einsatz kostenintensiv aufbereiteter Tonmineralien entbehrlich gemacht werden. Eine Verflüssigung soll gemäß dieser Druckschrift nicht durch Anlagerung von Ionen, sondern durch eine Verringerung der Oberflächenspannung infolge einer Zugabe von kostengünstiger Zellulose entstehen.

Die nicht gattungsgemäße Druckschrift US 5,294,255 A offenbart eine Betonzusammensetzung mit geringer Festigkeit, mit der ein Aushub gefüllt werden kann, ohne dass es nach dem Füllen zu Absenkungen kommen kann. Die Betonzusammensetzung soll eine hinreichende Viskosität aufweisen, so dass diese gepumpt werden kann und in dem Aushub Hohlräume ausfüllen kann. Vorgeschlagen wird in US 5,294,255 A eine neue, pumpbare, zementartige Mixtur mit einer gesteuerten niedrigen Festigkeit (CLSM, Controlled Low Strength Material). Die Mixtur soll zu einem Beton mit geringer Festigkeit aushärten können, wobei auch eine Separation von Komponenten der Mischung nicht auftreten soll. Einsatz finden soll in dem Gemisch ein aufgeschäumter verhältnismäßig harter Perlit, welcher eine geringe Dichte aufweist und eine feine Korngröße aufweist. Des Weiteren wird vorgeschlagen, dem Gemisch eine Beimischung hinzuzufügen, über welche einerseits die Pumpbarkeit und andererseits die Suspensions-Stabilität beeinflusst werden kann. In US 5,294,255 A werden vor diesem Hintergrund Beispiele für mögliche Zusammensetzungen angesprochen.

Die nicht gattungsgemäße Druckschrift EP 1 364 926 A1 betrifft eine selbst-nivellierende Zementmischung zum Füllen und Abdichten insbesondere von Kanälen, Baugruben, Abwasserkanälen und den Rohbau. Üblicherweise werden Rohre u. ä. in dem Aushub mit kompaktierendem Material abgedeckt, um diese zu Fixieren und den Aushub zu schließen, wobei üblicherweise herkömmlicher Beton oder eine Aufschüttung von Erde oder Gestein verwendet wird. Kritisiert wird hieran in EP 1 364 926 A1, dass die genannten Materialien ungeeignet sind, eine gewünschte Abdichtung herbeizuführen, da in diesen Materialien u. U. Hohlräume verbleiben. Andererseits kriecht insbesondere Erdmaterial oder Gesteinspartikel bei den Belastungen mit schweren Lasten im Straßenverkehr. EP 1 364 926 A1 schlägt ein Zementgemisch vor, welches ein effektives Füllen, Kompaktieren und Abdichten ermöglichen soll, zeitstabil ist und auf einfache Weise wieder entfernt werden kann. Vorgeschlagen wird zu diesem Zweck ein Gemisch aus einem grobkörnigen Sand mit mittleren Korngrößen von 3 mm, feinkörnigem Sand mit mittleren Korngrößen von 1,5 mm, Flugasche, Zement des Typs Portland 325, einem Schaumbildner für Zement, einem Fließmittel, welches aus einem Gemisch eines oberflächenaktiven Mittels und einem Lösungsmittel besteht, und Wasser. Anwendung finden soll ein derartiges Zementgemisch beispielsweise als Estrich, als Boden, als Isolationsgemisch zusammen mit anderen leichten Komponenten, zum Füllen von Hohlräumen im Boden oder von alten Behältern, für schallabsorbierende Paneele oder im Straßenbau.

US 4,361,661 A betrifft ein Gemisch aus Sand und einem Bindemittel mit einem organischen Klebstoff und anorganischem Füllmaterial, wobei dieses Gemisch eine größere thermische Leitfähigkeit aufweisen soll als trockener Sand. Hierbei ist in US 4,361,661 A angesprochen, dass ein effizienter Betrieb mit in der Erde angeordneten Hochspannungs-Erdleitungen von einer Wärmeübertragung in den Boden abhängig ist. US 4,361,661 A beschreibt es als bekannt, eine Hochspannungs-Erdleitung mit einem thermischen Füllmaterial zu umgeben. US 4,361,661 A weist darauf hin, dass zwar bekannt ist, dass Materialien wie reiner Quarz, Aluminium, Beryllium eine höhere thermische Leitfähigkeit besitzen als Sand und durchaus geeignete Materialien darstellen, dennoch aus ökonomischen Gründen Sand die bevorzugte Basiskomponente derartiger Füllmaterialien ist. Während in US 4,361,661 A die Wärmeleitfähigkeit des frisch gefüllten nassen Sandes mit 3 W/mK angegeben wird, wird in US 4,361,661 A darauf hingewiesen, dass die Wärmeleitfähigkeit des getrockneten Sandes auf 10 % abfällt, wodurch die Effizienz der Erdleitung reduziert wird und es sogar zu einem Versagen des Kabels kommen kann. Als aus dem Stand der Technik bekannte Maßnahmen zur Erhöhung der Wärmeleitfähigkeit nennt US 4,361,661 A ein Beimischen von Wachs-Bindemitteln oder anorganischen Bindemitteln wie Kaolinit, Kalziumkarbonat, Flugasche oder Kalk. Für eine Trocknungsdichte von ungefähr 2 gm/cm³ beträgt ohne Bindemittel die Wärmeleitfähigkeit 0,91 W/mK, während mit 8 Gewichtsprozent Kaolin die Wärmeleitfähigkeit 2,0 W/mK betragen soll. Des Weiteren wird es als bekannt in US 4,361,661 A beschrieben, dem Wachs Aluminium beizumischen, ohne dass dieses einen signifikanten Einfluss auf die Wärmeleitfähigkeit haben soll. US 4,361,661 A schlägt vor, zur Erhöhung der Wärmeleitfähigkeit Sandpartikel mit einem Bindemittel zu koppeln, welches ein organischer Klebstoff ist und mit einem anorganischen Füllmaterial mit geringer Partikelgröße gekoppelt werden soll. Hierbei soll das Bindemittel in einer volumetrischen Fraktion vorhanden sein, die einerseits größer ist als das Maximum der volumetrischen Fraktion des Bindemittels für eine filmbildende Struktur und andererseits nicht größer sein soll als die volumetrische Fraktion des Bindemittels für die Herbeiführung einer Hohlräume füllenden Struktur. Das Füllmaterial soll hierbei in dem Bindemittel mit einem Anteil vorhanden sein, der ausreichend ist für eine zumindest 40 %ige Erhöhung der thermischen Leitfähigkeit der Zusammensetzung im Vergleich zu der Zusammensetzung ohne das Füllmittel.

Der Artikel "Fluidized Cable Thermal Backfill" der Autoren H. S. Radhakrishna et alweist auf die Abhängigkeit der Wärmeleitfähigkeit eines Erdleitungs-Bettungsmaterials von der Feuchtigkeit, den klimatischen Bedingungen und dem Wachstum der Vegetation in der Umgebung und andererseits auf die Bedeutung einer guten Kompaktierung und Dichte des Füllmaterials hin. Der Artikel schlägt ein schlammartiges Füllmaterial vor, welches nach dem Setzen und Aushärten einerseits einen geringen thermischen Widerstand aufweist und andererseits eine hohe mechanische Festigkeit aufweist, damit dieses eingesetzt werden kann für ein Umhüllen eines Kabels. Hierbei soll das Füllmaterial aus natürlichen mineralischen Bestandteilen, Zementmaterial zwecks Gewährleistung der Verbindung und Festigkeit, einem Fließmittel und Zusätzen zur Verbesserung der thermischen Eigenschaften bestehen. Untersucht werden gemäß dem Artikel unterschiedliche Zusammensetzungen mit Komponenten wie Flugasche, Zement, Bentonit, Polyox, Wachs, Eisenerz, SiO₂, Al₂O₃, Fe₂O₃, CaO, MgO, K₂O, Na₂O, TiO₂, SO₃, Stahlfasern, metallische Füllmaterialien, Magnetit-Puder u. ä. Nach dem Aushärten der geprüften Materialien hat sich gezeigt, dass dieses keine Wiederaushubfähigkeit besitzt. Vielmehr muss das Material aufgebrochen werden mittels einer Betonsäge oder eines pneumatisch betriebenen Meißels.

Die nicht gattungsgemäße Druckschrift DE 696 07 105 T2 betrifft einen Mörtel mit hoher Wärmeleitfähigkeit, der in erdverlegte Rohrleitungen, die Fernleitungen enthalten, eingespritzt werden soll. Der Mörtel besteht aus einer Zusammensetzung aus Zement, Wasser, Bentonit und Dolomit, wobei der Dolomit eine Körnung mit einer Größe von weniger als 50 µm aufweisen soll. Hierbei soll der Dolomit die Wärmeleitfähigkeit bereitstellen. Für die gemäß DE 696 07 105 T2 vorgeschlagenen Zusammensetzungen sollen sich Wärmeleitfähigkeiten ergeben, welche maximal 1,27 W/mK beträgt.

Die nicht gattungsgemäße Druckschrift US 6,251,179 B1 betrifft einen Mörtel für geothermische Wärmepumpen zur Nutzung von Erdwärme. US 6,251,179 B1 schlägt eine Zusammensetzung aus Zement, Quarzsand, einem Super-Plastifizierer und Wasser vor, wobei der Gewichtsanteil des Quarzsandes größer sein soll als der Gewichtsanteil des Zements. Der Mörtel kann auch Bentonit beinhalten. Ergänzend kann ein Zusatz aus Latex, eine Beimengung zur Reduzierung eines Schrumpfens, Kalziumoxid oder Flugasche beigemischt sein. Für das derart gebildete Gemisch wird nach einer Trocknung innerhalb von 28 Tagen eine Wärmeleitfähigkeit von zumindest 1,5 W/mK oder zumindest 2,1 W/mK angegeben.

Weiterer Stand der Technik ist aus den Druckschriften US 3,719,511 A, GB 2 049 919 A, WO 2008/048717 A2, US 2002/162484A, US 2005/166802 A1, US 2002/056404 A1, AT 509 403 A1, US 4 050 258 A und 2012/127064 A2 bekannt.

Das technische Merkblatt "Erdverlegte Hochspannungsleitungen; Bettung in RSS Flüssigboden®" der Logic Schweiz AG betrifft einen Flüssigboden, dessen Wärmeleitfähigkeit 1,5 W/(mK) beträgt, der eine Dichte von 1,6 bis 2,1 t/m³ aufweist, der eine Tragfähigkeit (EV-Wert) von > 45 MN/m² besitzt, dessen Lösbarkeit der Bodenklasse 3 bis 5 entspricht, der eine einaxiale Druckfestigkeit nach 28 Tagen von 0,1 bis 0,8 N/mm² aufweist, der zeitweise fließfähig, pumpbar und selbstverdichtend ist, der setzungsfrei und schwindungsfrei sein soll, der schnell überbaubar sein soll und der jederzeit wieder mechanisch lösbar sein soll. Vorgeschlagen wird der Einsatz eines derartigen Flüssigbodenmaterials für eine Bettung erdverlegter Hochspannungsleitungen. Hierbei soll das Flüssigbodenmaterial eine Ableitung der Wärme, einen Schutz des Kabels und eine setzungsfreie Grabenverfüllung zur Vermeidung von Schäden an der Oberfläche bewirken, wobei durch Auswahl des Bettungsmaterials bereits auch Einfluss auf die Dimensionierung des Kabels genommen werden soll. Die dauerelastische Struktur des Flüssigbodenmaterials soll eine Ringspaltbildung zuverlässig vermeiden. Hingewiesen wird auf eine gute chemische und physikalische Verträglichkeit des Flüssigbodenmaterials mit den verwendeten Materialien des Kabels.

Der nachveröffentlichte Artikel "Erdkabel thermisch stabilisieren" vom 22.09.2015 aus der Allgemeinen Bauzeitung verweist auf ein Pilotprojekt aus dem Sommer, bei dem eine 3,5 km lange Erdkabeltrasse für eine Hochspannungsleitung eingebettet wurde. Das dabei eingesetzte Bettungsmaterial sollte einen vollständigen, dauerhaften und hohlraumfreien Kontakt zwischen Rohr und Bettungsmaterial und optimale Eigenschaften für die Maximierung des abzuführenden Wärmestroms zur Sicherung der maximalen Wärmeabfuhr ohne Austrocknung zwecks thermischer Stabilisierung des Kabels gewährleisten. Des Weiteren sollte das Bettungsmaterial einen fremdspannungsfreien Einbau des Kabels und eine dauerhafte Garantie einer Fremdspannungsfreiheit im Betrieb sicherstellen.

Der Artikel "Zeitweise fließfähige, selbstverdichtende Verfüllbaustoffe (ZFSV). Eine Bestandsaufnahme" in der Ausgabe 01/2014 der Zeitschrift "Infopoint Technik rbv" (Autor: Lukas Romanowski und Enrico Scholz) nennt als Anwendungsbereiche für Flüssigböden Einbettungen von sämtlichen Arten von Medienleitungen wie Strom, Gas, Wasser, Abwasser, Telekommunikation in Gräben, wobei ein beschleunigter Bauablauf, geringe Setzungen/Sackungen und eine Aushubfähigkeit bei späteren Aufgrabungen gewährleistet werden sollen und eine gute Wärmeleitfähigkeit sowie eine gute Gasdurchlässigkeit gewährleistet werden sollen.

Die Veröffentlichung "Hinweise für die Herstellung und Verwendung von zeitweise fließfähigen, selbstverdichtenden Verfüllbaustoffen im Erdbau H ZFSV" der "Forschungsgesellschaft für Straßen- und Verkehrswesen, Arbeitsgruppe Erd- und Grundbau" aus 2012 nennt als Anwendungsbereiche für ZFSV neben der Einbettung von Abwasserleitungen, Trinkwasserleitungen und Gasleitungen auch die Einbettung von Energieverteilungskabeln mit Nennspannungen bis 36 kV und die Einbettung von Telekommunikationsleitungen. Der einzusetzende Verfüllbaustoff ist hinsichtlich der zulässigen Größtkorngröße, der Fließfähigkeit und Konsistenz, Tragfähigkeit, Druckfestigkeit oder des CBR-Werts, der Wiederaushubfähigkeit und der Volumenstabilität zu spezifizieren. Hinsichtlich der Wiederaushubfähigkeit wird auf die Druckfestigkeit bei einem Probenalter von 28 Tagen Bezug genommen. Die Wiederaushubfähigkeit des ZFSV hängt ab beispielsweise von der Art des Bodens und der sonstigen Baustoffe (Korngrößenverteilung und Anteil gebrochener Körnungen), der Dichte der ZFSV, des Luftporenanteils (evtl. Zusatz von Porenbildnern), der Art und Zugabemenge der Bindemittel, von etwaigen Zusätzen und von puzzolanischen oder latenten hydraulischen Effekten.

Die Veröffentlichung "MICHTELL J K ABDEL-HADI O N ET AL: "Backfill materials for underground power cables : phase II: Backfill treatments, heat and moisture flow analyses, and field tests ; interim report", EPRI INTERIM REPORT, EPRI - ELECTRIC POWER RESEARCH INSTITUTE, US, Bd. EPRIO EL-1894, Nr. Project 7841-2, 1. Juni 1981 (1981-06-01), Seiten 1-289, XP009516263) betrifft ein Bettungsmaterial für ein Kabel, welches keinen ZFSV bildet. Vielmehr wird hier ein Gemisch von Bodenmaterial ("fire valley summer sand", "round robin sand" oder "monterey # sand") mit Wasser und Zement eingesetzt, welches nicht selbstverdichtend und begehbar bzw. überbaubar ist. Vorgeschlagen wird hier, Wachs zu verwenden, welches schmelzen soll und sich um die Partikel verteilen soll, um die Kontaktbedingungen zwischen den Partikeln zu verbessern. Diese verbesserten Kontaktbedingungen sollen dann zur Erhöhung der thermischen Wärmeleitfähigkeit führen.

### AUFGABE DER ERFINDUNG

Der vorliegenden Erfindung liegt die Aufgabe zugrunde, ein Erdleitungs-Bettungsmaterial und einen Erdleitungsbereich vorzuschlagen, welcher insbesondere hinsichtlich
- der wärmeleitenden Eigenschaften,
- der Einbettung der Erdleitung,
- einer Zugänglichkeit der Erdleitung auch in einem abgebundenen Zustand des Erdleitungs-Bettungsmaterials zu Reparatur- oder Wartungszwecken
verbessert ist.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen 2 bis 11 und dem Patentanspruch 12, welcher auf die Patentansprüche 1 bis 11 rückbezogen ist, zu entnehmen.

### BESCHREIBUNG DER ERFINDUNG

Die vorliegende Erfindung beruht auf der Erkenntnis, dass ein Erdleitungs-Bettungsmaterial den folgenden Anforderungen ausgesetzt ist:
- Grundsätzlich dient die Einbettung der Erdleitung in ein Erdleitungs-Bettungsmaterial der Bildung einer Ummantelung der Erdleitung, welche diese insbesondere gegenüber mechanischen und/oder chemischen Beanspruchungen schützen soll.
- Die Charakteristik und etwaige Verluste der Erdleitung hängen neben dem Querschnitt der Erdleitung und der Verlegeart maßgeblich von dem umgebenden Material und seinen wärmeleitenden Eigenschaften ab. Ungleichmäßigkeiten der Einbettung der Erdleitung oder der Erdleitung selber können zu lokalen Temperaturspitzen (so genannte "Hot-Spots") führen, welche schlimmstenfalls zu thermischen Schädigungen der Erdleitung führen. Selbst ohne das Auftreten derartiger lokaler Temperaturspitzen führt eine etwaige geringe thermische Leitfähigkeit des Erdleitungs-Bettungsmaterials zu einer von der elektrischen Beaufschlagung der Erdleitung abhängigen Temperaturerhöhung der Erdleitung, welche unerwünscht ist, da diese das Übertragungsverhalten der Erdleitung beeinflusst und zu u. U. von der übertragenen Energie abhängigen thermischen Längenänderungen der Erdleitung in dem Erdleitungs-Bettungsmaterial führen, welche im Extremfall zu Beschädigungen der Erdleitung und/oder des umgebenden Bettungsmaterials führen können. Die erläuterte Problematik verschärft sich u. U., wenn größere Abstände von in einer gemeinsamen Trasse parallel verlegten Erdleitungen aufgrund der mit Vergrößerung der Abstände ansteigenden Magnetfeld-Emissionen und/oder zur Vermeidung größerer Trassenquerschnitte nicht möglich sind.
- Des Weiteren hat sich gezeigt, dass die Erdleitungen insbesondere zu Wartungs-, Prüf-, Reparatur- oder Austauschzwecken zugänglich sein müssen. Erdleitungs-Bettungsmaterialien gemäß dem Stand der Technik, insbesondere solche in Ausbildung als Magerbetone (Sand-Zement-Mischungen) oder Spezialbetone (Powercrete), ermöglichen einen nachträglichen Zugang zu in diese eingebetteten Erdleitungen nur sehr erschwert, insbesondere nur unter Einsatz von schwerem Gerät (Bagger o.ä.).

Vor diesem Hintergrund wird erfindungsgemäß ein Erdleitungs-Bettungsmaterial aus einem zeitweise fließfähigen selbstverdichtenden Verfüllbaustoff vorgeschlagen. Hierbei erfüllen die erfindungsgemäßen ZFSV die Spezifikationen für ZFSV, wie diese von der Forschungsgesellschaft für Straßen- und Verkehrswesen in der Veröffentlichung "H ZFSV-Hinweise für die Herstellung und Verwendung von zeitweise fließfähigen, selbstverdichtenden Verfüllbaustoffen im Erdbau", FGSV-Verlag, Köln 2012, welche hiermit zum Gegenstand der vorliegenden Anmeldung gemacht werden, spezifiziert sind.

Erfindungsgemäß kann hierbei genutzt werden, dass der Verfüllbaustoff in dem temporären fließfähigen Zustand ohne Aufbringung zusätzlicher Verdichtungsenergie allein unter dem Einfluss der Schwerkraft Hohl- und Zwischenräume in dem Aushubkanal und in der Umgebung der Erdleitung vollständig ausfüllen kann. Beispielsweise ist eine Verdichtung mittels Vibrationen entbehrlich, welche zu Beschädigungen der Erdleitung führen könnte. Hinzu kommt, dass bei Einsatz von nicht fließfähigen und durch weitere Maßnahme verdichteten Verfüllbaustoffen gemäß dem Stand der Technik die Erdleitung inhomogenen Spannungen ausgesetzt werden kann, während bei Einsatz des ZFSV eine spannungsfreie Einbettung der Erdleitung gewährleistet ist. Da der fließfähige Zustand lediglich temporär vorliegt und nur während der Herstellung der Erdleitungstrasse genutzt wird, liegt im abgebundenen Zustand eine belastbare, nicht fließfähige Bettung der Erdleitung ohne verbleibende Hohlräume vor.

Der ZFSV ist im Rahmen der Erfindung mit mindestens einem Baustoff (wobei mehrere Baustoffe auch in Form eines Baustoffgemisches eingesetzt sein können) und/oder einem Bodenmaterial gebildet. Hierbei kann eine beliebige Gesteinskörnung und ein beliebiges Bodenmaterial verwendet werden. Möglich ist auch der Einsatz eines Recyclingmaterials, eines Gesteinsmehls, eines üblichen Kies-Sand-Gemisches mit Körnungen, wie diese für Kies-Sand-Gemische in geltenden Normen und Richtlinien festgelegt sind.

Als Boden kann auch das Bodenmaterial selbst verwendet werden, welches zur Herstellung des Aushubkanals zuvor ausgehoben worden ist, sofern dieses Bodenmaterial angesichts seiner Zusammensetzung und Körnung geeignet ist. Dieses Bodenmaterial wird dann zur Selektion der geeigneten Kornfraktionen gesiebt. Möglich ist aber auch die Verwendung eines separat bereitgestellten Baustoffes mit definierten Kornabstufungen. Hierbei handelt es sich insbesondere um ein Kies-Sand-Gemisch. Derartige Sande und Kiese werden zusammenfassend als Baustoffe bezeichnet. Weitere Informationen zu den Bodenklassifizierungen für bautechnische Zwecke können der DIN 18196 entnommen werden, wobei die in dieser Norm beschriebenen Baustoffe und deren Charakteristika auch im Rahmen der vorliegenden Erfindung eingesetzt werden können. Ebenfalls im Rahmen der Erfindung einsetzbare Gesteinskörnungen können der DIN EN 12620 entnommen werden. Im Rahmen der Erfindung finden Gesteinskörnungen Einsatz bis hin zu maximal 16 mm Körnung.

Da die Wärmeleitfähigkeit neben der Materialzusammensetzung und der Feuchtigkeit in erster Linie von der Porosität abhängt, ist u. U. eine möglichst hohe Packungsdichte mit wenigen Poren notwendig. Für eine ideale Packungsdichte und somit auch einen gut verdichteten Verfüllbaustoff wird eine weit gestufte Sieblinie genutzt. Die Zwischenräume der groben Körnungen können durch verschiedene kleinere Korngruppen aufgefüllt und Porenräume reduziert werden. Dabei kann u. U. auch die Korngröße aller inert eingesetzten Materialien berücksichtigt werden und der Wassergehalt kann daraufhin abgestimmt werden. Die ideale Abstimmung der Sieblinie führt u. U. dazu, dass die Festigkeit und die Gefügedichtigkeit erhöht wird, der Hohlraumgehalt reduziert wird und/oder die Kontaktflächen der einzelnen Körner und Partikel untereinander vergrößert werden, womit u. U. die thermische Leitfähigkeit erhöht oder verbessert wird.

Mit der theoretischen Idealsieblinie, in Anlehnung an die sogenannte Fullerkurve, kann ein hohlraumarmer ZFSV errechnet werden (Fullergleichung für stetige und unstetige Sieblinien nach A. Hummel "Das Beton-ABC" von 1959: A = 100 . (d/D)n). Mit Hilfe der Exponenten n = 0,1 bis n = 0,7 (Abhängig vom Größtkorn) und einem Größtkorn von maximal 16 mm können höhere Packungsdichten und höhere thermische Leitfähigkeiten erzeugt werden.

Des Weiteren besitzt der erfindungsgemäße ZFSV mindestens einen Zusatz zur Steuerung der Konsistenz und/oder der Stabilisierung des Abbindeverhaltens. Hierbei kann der Zusatz auf organischen- und/oder anorganischen Komponenten basieren.

Des Weiteren verfügt der ZFSV über mindestens ein Bindemittel, welches beispielsweise hydraulisch, nicht-hydraulisch, latent-hydraulisch oder puzzolanisch ausgebildet sein kann. Schließlich weist der ZFSV Wasser auf.

Erfindungsgemäß wird der ZFSV mit definierten Materialeigenschaften ausgestattet:
- Erfindungsgemäß wird der ZFSV bei einem Feuchtegehalt von 5 Massenprozent mit einer thermischen Leitfähigkeit von zumindest 1 W/(mK) ausgestattet und/oder diese beträgt bei 15 Massenprozent Feuchte mindestens 2 W/(mK). Durch Einsatz einer verhältnismäßig großen thermischen Leitfähigkeit können die vorgenannten Probleme, insbesondere die Ausbildung von Hot-Spots und die von der übertragenen Energie abhängige Veränderung der Temperatur und Dehnung der Erdleitung, vermieden werden. Versuche haben des Weiteren zu dem Ergebnis geführt, dass der Einsatz einer gut wärmeleitenden Bettung der Erdleitung mit Ableitung von im Bereich der Erdleitung entstehender Wärme zu Leistungssteigerungen der Netztrasse führen kann.

- Des Weiteren ist der ZFSV in ungebundenem Zustand fließfähig, selbstverdichtend und mischungsstabil. Vorzugsweise ist der ZFSV homogen und/oder mit einem Ausbreitmaß von 50 cm bis 70 cm ausgebildet (in Anlehnung an DIN EN 12350-5).
- Schließlich ist der ZFSV in abgebundenem Zustand volumenstabil. Nach max. 48 Stunden ist der ZFSV begehbar (insbesondere nach 4 bis 24 Stunden). Darüber hinaus ist der ZFSV in abgebundenem Zustand wiederaushubfähig, worunter insbesondere verstanden wird, dass der ZFSV "von Hand" oder mittels eines Spatens oder einer Schaufel lösbar ist. Beispielsweise kann die Druckfestigkeit des ZFSV nach 28 Tagen kleiner als 2 N/mm², vorzugsweise kleiner 0,8 N/mm² oder sogar kleiner als 0,3 N/mm³, sein. Hierbei kann für das Wiederausheben im Bereich einer Druckfestigkeit von 0,3 bis 0,8 N/mm² als Lösewerkzeug auch eine Spitzhacke oder der Löffel eines Minibaggers Einsatz finden, während über 0,8 N/mm² als Lösewerkzeug ein Baggerlöffel oder ein Pressluft- oder Hydraulikmeißel Einsatz finden kann.

Das erfindungsgemäße Erdleitungs-Bettungsmaterial kann somit beispielsweise mit einer hohen thermischen Leitfähigkeit ausgestattet werden, welche der Leitfähigkeit eines besonders leitfähigen Spezialbetons entspricht, und andererseits aber auch die Vorteile eines wiederlösbaren "Flüssigbodens" (ZFSV) besitzen, indem die Erdleitung ohne mechanische Verdichtung dauerhaft hohlraum- und spannungsfrei ummantelt werden kann. Erfindungsgemäß kommen im Vergleich zur konventionellen Verfüllung eines Aushubkanals mit Magerbeton oder Sandbettung wesentlich geringere Breiten des Aushubkanals in Betracht, wobei eine Begehbarkeit bereits nach kurzer Zeit wie beispielsweise 12 Stunden oder einem Tag sowie eine vollständige Belastbarkeit / Überbaubarkeit beispielsweise nach einer Woche gewährleistet werden kann. Dennoch ist eine Wiederaushubfähigkeit gewährleistet. Das erfindungsgemäße Erdleitungs-Bettungsmaterial führt u. U. auch zu geringeren Bodenbewegungen und minimierten Störungen der Lagerungsdichte, der Schichtenfolge und des Schichtenverbundes im Boden sowie geringeren Abtransport- und Entsorgungskosten, womit ein Beitrag zu wirtschaftlich sinnvollen und nachhaltigeren Baumaßnahmen mit geringeren Emissionen geleistet wird. Mit der homogenen volumenbeständigen Verfüllung erfolgt eine spannungsfreie und dauerhafte Einbettung der Erdleitung mit geringen Wartungs- und Instandhaltungskosten bei gleichzeitiger Sicherstellung, dass mechanische und chemische Einwirkungen auf die Erdleitung ausgeschlossen werden können. Durch die erfindungsgemäße thermische Leitfähigkeit kann das Erdleitungs-Bettungsmaterial Emissionen von Wärme durch die Erdleitung aufnehmen und ableiten, womit kleine Abstände parallel verlegter Kabel in Aushubkanälen ermöglicht sind. Vorzugsweise findet das Erdleitungs-Bettungsmaterial Einsatz für Erdleitungen für Hochspannung (z.B. 110 kV) oder Höchstspannung (z.B. 220 oder 380 kV) oder auch für Mittelspannung (circa 1 - 50 kV) und Niederspannung (circa 400V).

Grundsätzlich kann der ZFSV Bindemittel mit einem beliebigen Massenanteil aufweisen. Vorzugsweise weist das Bindemittel im ZFSV einen Massenanteil von maximal 6 Massenprozent (insbesondere maximal 4 Massenprozent) auf, womit sich das erfindungsgemäße Erdleitungs-Bettungsmaterial von herkömmlichem Beton unterscheidet mit den hieraus resultierenden abweichenden Eigenschaften.

Auch für den mindestens einen Baustoff und/oder das Bodenmaterial (im Folgenden auch als Gesteinskörnung bezeichnet) des ZFSV sind grundsätzlich beliebige Massenanteile möglich. In bevorzugter Ausgestaltung der Erfindung findet/finden allerdings mindestens ein Baustoff und/oder das Bodenmaterial mit einem Massenanteil von mindestens 60 Massenprozent (insbesondere mindestens 70 Massenprozent) Einsatz.

Gemäß einem weiteren erfindungsgemäßen Vorschlag kann die thermische Leitfähigkeit des Erdleitungs-Bettungsmaterials durch Zusatz mindestens eines wärmeleitenden Materials weiter erhöht werden, wobei durch Vorgabe des Massenanteils dieses Zusatzes gezielt die thermische Leitfähigkeit des Erdleitungs-Bettungsmaterials vorgegeben werden kann. So kann bspw. bei Einsatz eines Zusatzes von wärmeleitenden Materialien des ZFSV bei einem Feuchtegehalt von 5 Massenprozent eine thermische Leitfähigkeit von mindestens 2 W/(mK) erzielt werden und/oder bei einer Feuchte von 15 Massenprozent mit Einsatz eines Zusatzes eines wärmeleitenden Materials eine thermische Leitfähigkeit von mindestens 3 W/(mK) erzielt werden.

Grundsätzlich sind beliebige Zusätze mindestens eines wärmeleitenden Materials möglich. In bevorzugter Ausgestaltung handelt es sich bei dem Zusatz des wärmeleitenden Materials um Graphit, Metallspäne, Asche, Kohle und/oder Siliciumcarbid.

Grundsätzlich sind beliebige Massenanteile des Zusatzes mindestens eines wärmeleitenden Materials möglich. In bevorzugter Ausgestaltung findet bezogen auf die Masse der Gesteinskörnung ein Massenanteil von maximal 10 Massenprozent (insbesondere maximal 5 Massenprozent) des Zusatzes mindestens eines wärmeleitenden Materials Einsatz.

Vorzugsweise beträgt infolge einer Zugabe von mindestens einem wärmeleitenden Material (bspw. Graphit, SIC etc.) die thermische Leitfähigkeit des ZFSV bei einem Feuchtegehalt von 5 Massenprozent mind. 2 W/(mK) und/oder bei 15 Massenprozent Feuchte mindestens 3 W/(mK).

Für eine weitere erfindungsgemäße Ausgestaltung weist in dem Erdleitungs-Bettungsmaterial das Wasser des ZFSV einen Massenanteil im Bereich von 10 bis 30 Massenprozent auf, womit sich der ZFSV von dem Einsatz von Beton als Erdleitungs-Bettungsmaterial unterscheidet. Über die Wahl des Massenanteils des Wassers in dem genannten Bereich kann beispielsweise die Fließfähigkeit des ZFSV und das Vermögen des Ausfüllens von Hohlräumen eingestellt werden.

Grundsätzlich kann durch die bereits erläuterten Maßnahmen die Einstellung der thermischen Leitfähigkeit erfolgen. Für einen weiteren Vorschlag der Erfindung weist in dem Erdleitungs-Bettungsmaterial der ZFSV einen Zusatz mindestens eines Phasenwechselmaterials auf. Derartige Phasenwechselmaterialien sind grundsätzlich als Zusatz von Baustoffen wie Beton oder Putze bekannt, wo diese aber der klimatischen Optimierung von Räumen, welche durch den Beton oder Putz begrenzt sind, dienen (vgl. DE 10 2004 021 179 A1, DE 696 01 466 T2, DE 103 33 668, DE 102010047149 A1, DE 10 2010 047 149 B4, DE 20 2010 017 634 U1). Der Erfindung zugrundeliegende Untersuchungen haben zu dem Ergebnis geführt, dass der Einsatz derartiger Phasenwechselmaterialien auch für nicht mit Beton gebildete erfindungsgemäße Erdleitungs-Bettungsmaterialien vorteilhaft sein kann.

Phasenwechselmaterialien nehmen Wärmeenergie durch Änderung des Aggregatzustandes, insbesondere von fest nach flüssig, auf und speichern diese. Diese Änderung des Aggregatzustandes ist bei einer Abkühlung reversibel mit u. U. langsamer Abgabe der gespeicherten Wärme. Während für andere Materialien der Wärmeeintrag immer mit einer Temperaturänderung verbunden ist, hat die Änderung des Aggregatzustandes den Vorteil, dass die Temperatur trotz Aufnahme der Wärmeenergie im Wesentlichen unverändert bleiben kann oder sich nur in einem geringen Umfang ändert. Somit kann mit Änderung des Aggregatzustandes bei Wärmeeintrag oder umgekehrter Änderung des Aggregatzustandes bei Abgabe der Wärme gewährleistet werden, dass sich allenfalls eine geringe Temperaturänderung des Erdleitungs-Bettungsmaterials (und damit der darin angeordneten Erdleitung) ergibt. Hierdurch kann beispielsweise die Lebensdauer der Erdleitung erhöht werden. Besonders wirkungsvoll kann auch der Einsatz der Phasenwechselmaterialien zur Vermeidung der Hot-Spots sein.

Als mögliche Phasenwechselmaterialien können sämtliche aus dem Stand der Technik bekannten Phasenwechselmaterialien, insbesondere Paraffin, genutzt werden. Derartige Phasenwechselmaterialien werden auch als "Phase-Changing-Materials" oder kurz PCMs bezeichnet.

Grundsätzlich kann der Zusatz eines Phasenwechselmaterials einen beliebigen Massenanteil aufweisen. In bevorzugter Ausgestaltung der Erfindung besitzt der Zusatz eines Phasenwechselmaterials bezogen auf die Masse der Gesteinskörnung des Erdleitungs-Bettungsmaterials einen Massenanteil von maximal 10 Massenprozent (insbesondere maximal 5 Massenprozent).

Erfindungsgemäß ist des Weiteren erkannt worden, dass u. U. eine Erhöhung der thermischen Leitfähigkeit in dem Erdleitungs-Bettungsmaterial erzielt werden kann, wenn der ZFSV gezielt feucht gehalten wird. Dies kann auf vielfältige Weise erfolgen. Ebenfalls möglich ist, dass in dem Erdleitungs-Bettungsmaterial gezielt Feuchtigkeit gebunden wird. Dies kann beispielsweise durch so genannte SAPs oder MCs (Methylcellulosen oder Cellulosen) erfolgen oder durch andere Zusätze, welche in der Lage sind, Feuchtigkeit zu binden.

Eine weitere Lösung der der Erfindung zugrundeliegenden Aufgabe ist gegeben durch einen Erdleitungsbereich, welcher von dem Boden im Bereich der Trasse gebildet ist. Der Erdleitungsbereich verfügt über einen Aushubkanal. In dem Aushubkanal ist das Erdleitungsleitungs-Bettungsmaterial der zuvor erläuterten Art angeordnet. In dem ZFSV ist mindestens eine Erdleitung eingebettet. Des Weiteren verfügt der Erdleitungsbereich über eine Auffüllung mit Erdaushub.

Vorzugsweise ist zwischen dem ZFSV mit darin eingebetteter Erdleitung und der darüber angeordneten Auffüllung mit Erdaushub (mindestens) ein Trassenband oder (mindestens) eine Trassenplatte angeordnet, welches oder welche bspw. als Trenn- oder Warnschicht nach oben dienen kann und einen ergänzenden Schutz gegen mechanische Beschädigungen nach unten bereitstellen kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUR

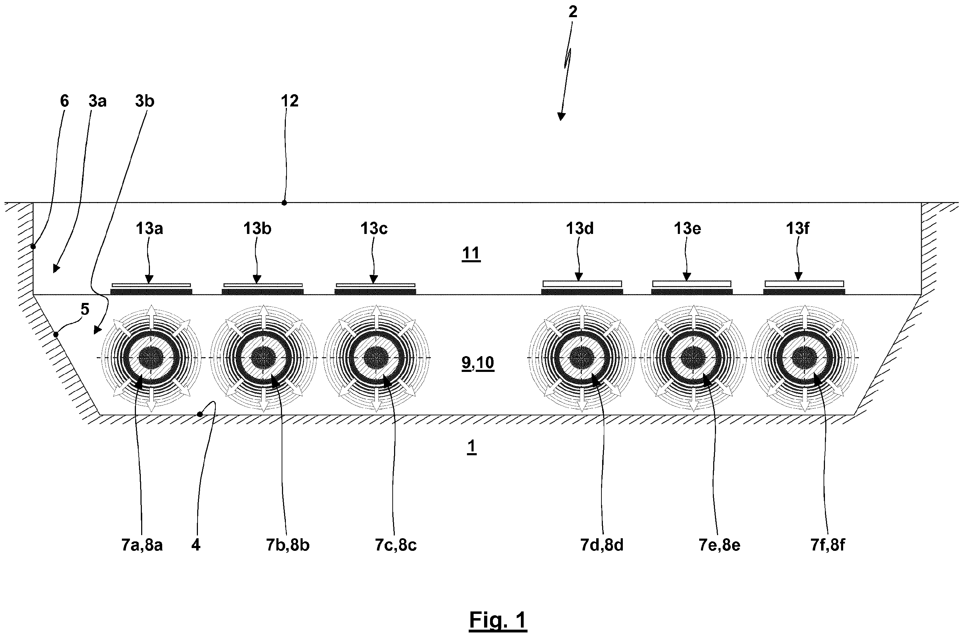

Im Folgenden wird die Erfindung anhand eines in der einzigen Figur dargestellten bevorzugten Ausführungsbeispiels weiter erläutert und beschrieben. Die einzige Figur 1 zeigt schematisiert einen Erdleitungsbereich mit darin angeordnetem Erdleitungs-Bettungsmaterial und darin eingebetteten Erdleitungen.

### BESCHREIBUNG DER FIGUR

Fig. 1 zeigt einen Boden 1 im Bereich eines Querschnitts durch eine Netztrasse 2. In dem Boden 1 ist durch Entfernung von Bodenmaterial ein Aushubkanal 3 hergestellt. Hierbei verläuft der Aushubkanal 3 in seine Längsrichtung, welche vertikal zur Zeichenebene gemäß Fig. 1 orientiert ist, beliebig, beispielsweise stückweise geradlinig oder beliebig kurvenförmig. Der Aushubkanal 3 ist mit einem hier ebenen Boden 4, sich in Richtung des Bodens 4 verjüngenden Abschrägungen 5 und an die Abschrägungen 5 nach oben anschließenden vertikalen Seitenbereichen 6 gebildet, wobei die Ausführung des Aushubkanals 3 durchaus von dieser schematischen Darstellung gemäß Fig. 1 abweichen kann.

In dem Aushubkanal 3b befindet sich mindestens eine Erdleitung 7, wobei für das Ausführungsbeispiel gemäß Fig. 1 sechs sich parallel zueinander, in derselben Horizontalebene angeordnete Erdleitungen (mit oder ohne Hüllrohr oder andere Ummantelungen) 7a bis 7f in dem Aushubkanal 3b angeordnet sind. Hierbei sind die Erdleitungen 7a bis 7f als Erdkabel 8a bis 8f ausgebildet (wobei für eine alternative Ausführungsform durchaus möglich ist, dass die Erdleitungen 7 als thermisch beanspruchte Rohre für ein Fluid ausgebildet sind oder in Hüllrohren oder anderen Ummantelungen verlegt werden).

Der Aushubkanal 3b ist mit einem Erdleitungs-Bettungsmaterial 9 aus einem zeitweise fließfähigen selbstverdichtenden Verfüllbaustoff 10 (hier auch als "ZFSV" abgekürzt) gefüllt. In dem Erdleitungs-Bettungsmaterial 9 sind die Erdleitungen 7a bis 7f, hier die Erdkabel 8a bis 8f, eingebettet. Für das dargestellte Ausführungsbeispiels gemäß Fig. 1 sind die Erdkabel 8a bis 8f derart in das Erdleitungs-Bettungsmaterial 9 eingebettet, dass die Erdkabel 8a bis 8f vollständig von dem Erdleitungs-Bettungsmaterial 9 umgeben sind und sich oberhalb und unterhalb der Erdkabel 8a bis 8f sowie auch seitlich von diesen und zwischen benachbarten Erdkabeln 8a bis 8f Erdleitungs-Bettungsmaterial 9 befindet. Abweichend ist aber auch möglich, dass nur eine teilweise Einbettung der Erdkabeln 8a bis 8f in das Erdleitungs-Bettungsmaterial 9 erfolgt, so dass sich die Erdkabel 8a bis 8f teilweise nach oben aus dem Erdleitungs-Bettungsmaterial 9 heraus erstrecken.

Infolge der selbstverdichtenden Eigenschaft des ZFSV 10 schließt das Erdleitungs-Bettungsmaterial 9 unmittelbar an die Erdkabel 8a bis 8f an, ohne dass sich hier oder an anderer Stelle signifikante Zwischenräume oder Hohlräume ergeben. Eine zusätzliche Verdichtung des ZFSV 10 ist grundsätzlich möglich, aber im Rahmen der Erfindung u. U. entbehrlich. Der ZFSV 10 ist wie zuvor erläutert ausgebildet und hergestellt. Insbesondere beinhaltet der ZFSV 10 Bodenmaterial, welches zuvor zur Herstellung des Aushubkanals 3 aus dem Boden 1 ausgehoben worden ist, wobei dieses zur Steuerung der Korngröße auch einem Selektionsprozess mit einem Sieben unterworfen worden sein kann vor der Mischung mit den weiteren Komponenten zum ZFSV 10. Der Aushubkanal 3 ist (nach Abbinden des ZFSV 10) mit einer Auffüllung 11 aus Erdaushub aufgefüllt, welcher sich zwischen den Seitenbereichen 6 erstreckt und womit sich eine im Wesentlichen ebene Oberfläche 12 ergibt. Vorzugsweise ist der die Auffüllung 11 bildende Erdaushub durch Bodenmaterial gebildet, welches zuvor zur Herstellung des Aushubkanals 3 ausgehoben worden ist.

Möglich ist, dass (wie in Fig. 1 dargestellt) zwischen der Schicht des Erdleitungs-Bettungsmaterials 9 und der durch die Auffüllung 11 gebildeten Schicht Trassenbänder oder Trassenplatten 13a bis 13f angeordnet sind. Diese dienen der Kenntlichmachung der Regionen, im Bereich welcher die Erdkabel 8a bis 8f angeordnet sind, nach oben und/oder einem (ergänzenden) Schutz des Erdleitungs-Bettungsmaterials 9 und der darin angeordneten Erdkabel 8a bis 8f bspw. gegenüber mechanischen Beschädigungen von oben.

Für den Fachmann wird ersichtlich sein, dass eine grundsätzliche anderweitige Ausbildung Dickenverläufe der Schichten, eine Ergänzung weiterer Schichten oder auch ein Entfall der Auffüllung 11 und/oder der Einsatz von weiteren Zusatzkörpern und Bauelementen möglich ist, ohne dass hierdurch der erfindungsgemäße Grundgedanke verlassen wird.

In Fig. 1 ist mit Pfeilen und konzentrischen Kreisen schematisch die Ableitung der Wärme im Erdleitungs-Bettungsmaterial 9 dargestellt, welche die Erdkabel 8a bis 8f bei elektrischer Beaufschlagung derselben abgeben.

Die Angaben der Massenanteile in der vorliegenden Anmeldung in Massenprozent beziehen sich auf den Zeitpunkt der Herstellung des ZFSV 10, also der Mischung der Bestandteile desselben.

Alternativ zum Einsatz des Bettungsmaterials für Erdleitungen sind insbesondere folgende Einsatzgebiete für dieses Material möglich:
- Bettungsmaterial für Erdwärmekollektoren, Wärmespeicher und Wärmetauscher und Kombinationen aus diesen Bauteilen,
- Einbettung, Verfüllung und Hinterfüllung in Böden, Untergründen und Grundwasser an Bauteilen, Bauwerken und Flächen,
- Verfüllbaustoff im Tiefbau insbesondere bei thermischer Nutzung zur Wärmeableitung, Wärmerückgewinnung, Wärmenutzung, Wärmestromführung und Temperierung von Verkehrsflächen (Straßen, Wege, Parkplätze) zur Kühlung im Sommer und zur Erwärmung im Winter (frostfreie Verkehrsflächen).

Im Rahmen der Erfindung werden ZFSV mit Bindemittel (vorwiegend Zement und/oder Kalk), Wasser und meist einem Stabilisator (z.B. feinkörniges Material, Suspension, tonhaltiges Material, Ton-Mineral-Gemisch) sowie Boden und/oder Baustoffe nach TL BuB E-StB mit unterschiedlicher Gesteinskörnung und/oder Bodenhub zeitweise fließfähig hergestellt. Die thermische Leitfähigkeit hängt neben der Materialzusammensetzung und der Feuchtigkeit in erster Linie von der Porosität des ZFSVs ab. Im Rahmen der Erfindung wird u. U. eine möglichst hohe Packungsdichte mit wenigen Poren angestrebt. Dabei ist die Korngröße aller inert eingesetzten Materialien zu berücksichtigen und der Wassergehalt darauf abzustimmen. Durch eine wärmeleitende Gesteinskörnung sowie weitere wärmeleitende Materialien (Siliciumcarbid, Graphit etc.) ist es möglich, die thermischen Eigenschaften des ZFSV weiter zu verbessern. Vorzugsweise strebt die Erfindung eine thermische Leitfähigkeit von mindestens 1 bis 2 W/(mK) bei einem Feuchtegehalt von 5 Massenprozent und 2 bis 3 W/(mK) bei 15 Massenprozent Feuchte an.

Im Folgenden werden einige nicht beschränkende Beispiele möglicher Zusammensetzungen oder Mischungen eines erfindungsgemäßen Erdleitungs-Bettungsmaterial (9) angegeben, ohne dass eine Einschränkung der Erfindung auf diese Ausführungsbeispiele erfolgen soll:

### Mischungsbeispiel 1 (Leitfähigkeit ≥ 1 W/(mK) bei 5 M.-% Feuchte):

- Baustoff, Baustoffgemisch und/oder Boden (0/16): 82%
- Bindemittel: 3%
- Wasser: 13%
- Stabilisator: 2 %

### Mischungsbeispiel 2 (Leitfähigkeit ≥ 2 W/(mK) bei 5 M.-% Feuchte):

- Baustoff, Baustoffgemisch und/oder Boden (0/16): 74%
- Bindemittel: 3%
- Wasser: 17%
- Stabilisator: 2 %
- Wärmeleitendes Material: 4%

### Mischungsbeispiel 3 (Leitfähigkeit ≥ 1 W/(mK) bei 5 M.-% Feuchte, zzgl. PCMs):

- Baustoff, Baustoffgemisch und/oder Boden (0/16): 79%
- Bindemittel: 3%
- Wasser: 12%
- Stabilisator: 2 %
- PCM: 4%

### Mischungsbeispiel 4 (Leitfähigkeit ≥ 2 W/(mK) bei 5 M.%Feuchte, zzgl. PCMs):

- Baustoff, Baustoffgemisch und/oder Boden (0/16): 71%
- Bindemittel: 3%
- Wasser: 16%
- Stabilisator: 2 %
- Wärmeleitendes Material: 4%
- PCM: 4%

Die obigen Ausführungsbeispiele sind sämtlich der mittleren Wiederaushubfähigkeitsklasse (Fuller: n = 0,2 bis 0,6) zuzuordnen. Bei den Prozentangaben handelt es sich um Massenprozentangaben, wobei die Prozentangaben exakt gelten können oder jeweils Abweichungen zu den angegebenen Prozentangaben um +/- 10 % oder +/- 5 % möglich sind.

### BEZUGSZEICHENLISTE

- 1: Boden
- 2: Netztrasse
- 3: Aushubkanal
- 4: Bodenbereich
- 5: Abschrägung
- 6: Seitenbereich
- 7: Erdleitung
- 8: Erdkabel
- 9: Erdleitungs-Bettungsmaterial
- 10: zeitweise fließfähiges selbstverdichtender Verfüllbaustoff (ZFSV)
- 11: Auffüllung
- 12: Oberfläche
- 13: Trassenband, Trassenplatte

## Patentansprüche

1. Erdleitungs-Bettungsmaterial (9), welches mit einem zeitweise fließfähigen selbstverdichtenden Verfüllbaustoff (10) gebildet ist, der
a) mindestens einen Baustoff und/oder Bodenmaterial aufweist, wobei das Bodenmaterial zur Selektion der geeigneten Kornfraktionen derart gesiebt ist oder der Baustoff mit definierten Korngruppen oder Kornabstufungen derart separat bereitgestellt ist, dass die Körnung maximal 16 mm beträgt,
b) mindestens einen Zusatz zur Steuerung der Konsistenz und/oder der Stabilisierung des Abbindeverhaltens aufweist,
c) mindestens ein Bindemittel aufweist,
d) Wasser aufweist,
e) eine thermische Leitfähigkeit von mindestens 1 W/(mK) bei 5 Massenprozent Feuchte aufweist und/oder eine thermische Leitfähigkeit von mindestens 2 W/(mK) bei 15 Massenprozent Feuchte aufweist.
f) im ungebundenen Zustand fließfähig, selbstverdichtend und mischungsstabil ist und
g) im abgebundenen Zustand eine Wiederaushubfähigkeit aufweist, volumenstabil ist und nach maximal 48 Stunden begehbar ist, und
h) der zeitweise fließfähige selbstverdichtende Verfüllbaustoff eine Sieblinie aufweist, welche mit der Fullergleichung mit A = 100 · (d/D)ⁿ mit Hilfe der Exponenten n = 0,1 bis n = 0,7 und mit einem Größtkorn D von maximal 16 mm errechnet wird.

2. Erdleitungs-Bettungsmaterial (9) nach Anspruch 1, **dadurch gekennzeichnet, dass** das Bindemittel des zeitweise fließfähigen selbstverdichtenden Verfüllbaustoffs (10) einen Massenanteil von maximal 6 Massenprozent aufweist.

3. Erdleitungs-Bettungsmaterial (9) nach einem der vorhergehenden Ansprüche, **dadurch gekennzeichnet, dass** der mindestens eine Baustoff und/oder das Bodenmaterial des zeitweise fließfähigen selbstverdichtenden Verfüllbaustoffs (10) einen Massenanteil von mindestens 60 Massenprozent aufweist/aufweisen.

4. Erdleitungs-Bettungsmaterial (9) nach einem der vorhergehenden Ansprüche, **dadurch gekennzeichnet, dass** der zeitweise fließfähige selbstverdichtende Verfüllbaustoff (10) einen Zusatz mindestens eines wärmeleitenden Materials aufweist.

5. Erdleitungs-Bettungsmaterial (9) nach Anspruch 4, **dadurch gekennzeichnet, dass** der Zusatz mindestens eines wärmeleitenden Materials mit Graphit, Metallspänen, Asche, Kohle und/oder Siliciumcarbid gebildet ist.

6. Erdleitungs-Bettungsmaterial (9) nach Anspruch 4 oder 5, **dadurch gekennzeichnet, dass** der Zusatz mindestens eines wärmeleitenden Materials einen Massenanteil von maximal 10 Massenprozent (bezogen auf die Gesteinskörnung) aufweist.

7. Erdleitungs-Bettungsmaterial (9) nach einem der Ansprüche 4 bis 6, **dadurch gekennzeichnet, dass** das Erdleitungs-Bettungsmaterial nach Zugabe von wärmeleitenden Materialien eine thermische Leitfähigkeit von
a) mindestens 2 W/(mK) bei 5 Massenprozent Feuchte und/oder
b) mindestens 3 W/(mK) bei 15 Massenprozent Feuchte
aufweist.

8. Erdleitungs-Bettungsmaterial (9) nach einem der vorhergehenden Ansprüche, **dadurch gekennzeichnet, dass** das Wasser des zeitweise fließfähigen selbstverdichtenden Verfüllbaustoffs (10) einen Massenanteil im Bereich von 10 bis 30 Massenprozent aufweist.

9. Erdleitungs-Bettungsmaterial (9) nach einem der vorhergehenden Ansprüche, **dadurch gekennzeichnet, dass** der zeitweise fließfähige selbstverdichtende Verfüllbaustoff (10) einen Zusatz mindestens eines Phasenwechselmaterials aufweist.

10. Erdleitungs-Bettungsmaterial (9) nach Anspruch 9, **dadurch gekennzeichnet, dass** der Zusatz mindestens eines Phasenwechselmaterials einen Massenanteil von maximal 10 Massenprozent (bezogen auf die Gesteinskörnung) aufweist.

11. Erdleitungs-Bettungsmaterial (9) nach einem der vorhergehenden Ansprüche, **dadurch gekennzeichnet, dass** der zeitweise fließfähige selbstverdichtende Verfüllbaustoff (10) einen Zusatz mindestens eines Feuchtigkeit bindenden Materials aufweist.

12. Erdleitungsbereich mit
a) einem Aushubkanal (3),
b) einem in dem Aushubkanal (3b) angeordneten Erdleitungs-Bettungsmaterial (9) nach einem der vorhergehenden Ansprüche, wobei in den zeitweise fließfähigen selbstverdichtenden Verfüllbaustoff (10) mindestens eine Erdleitung (7a - 7f) eingebettet ist, und
c) einer Auffüllung (11) mit Erdaushub, wobei vorzugsweise zwischen dem zeitweise fließfähigen selbstverdichtenden Verfüllbaustoff (10) mit darin eingebetteter Erdleitung (7a - 7f) und der darüber angeordneten Auffüllung (11) mit Erdaushub ein Trassenband oder eine Trassenplatte (13) angeordnet ist.

## Claims

1. Underground line bedding material (9) comprising a temporarily flowable, self-compacting filling building material (10) which
a) comprises at least one building material and/or soil material, the soil material being sieved for a selection of suitable grain fractions or the building material being separately provided with defined grain groups or grain gradations in a way such that the granulation has a maximum of 16 mm,
b) comprises at least one additive for controlling the consistency and/or for stabilizing the setting behaviour,
c) comprises at least one binding means,
d) comprises water,
e) comprises a thermal conductivity of at least 1 W/(mK) for a humidity of 5 percent by weight and/or comprises a thermal conductivity of at least 2 W/(mK) for a humidity of 15 percent per weight,
f) is flowable, self-compacting and a stable mixture in the unset state and
g) in the set state can be excavated, has a stable volume and is walkable after a maximum of 48 hours, and
h) the temporarily flowable self-compacting filling building material having a sieve curve which can be calculated from the Fuller equation with A = 100 · (d/D)ⁿ by use of the components n = 0.1 to n = 0.7 and with a maximum grain D of a maximum of 16 mm.

2. Underground line bedding material (9) of claim 1, **characterised in that** the binding means of the temporarily flowable self-compacting filling building material (10) comprises a mass percentage of a maximum of 6 percent per weight.

3. Underground line bedding material (9) of one of the preceding claims, **characterised in that** the at least one building material and/or the soil material of the temporarily flowable self-compacting filling building material (10) has a mass percentage of a minimum of 60 percent per mass.

4. Underground line bedding material (9) of one of the preceding claims, **characterised in that** the temporarily flowable self-compacting filling building material (10) comprises an additive of at least one heat-conducting material.

5. Underground line bedding material (9) of claim 4, **characterised in that** the additive of at least one heat conducting material comprises graphite, metal cuttings, ash, coal and/or silicon carbide.

6. Underground line bedding material (9) of claim 4 or 5, **characterised in that** the additive of at least one heat conducting material has a mass percentage of a maximum of 10 percent per mass (related to the aggregate).

7. Underground line bedding material (9) of one of claims 4 to 6, **characterised in that** the underground line bedding material comprises a thermal conductivity of
a) at least 2 W/(mK) for a humidity of 5 percent per mass and/or
b) at least 3 W/(mK) for a humidity of 15 percent per mass
after the addition of the heat conducting materials.

8. Underground line bedding material (9) of one of the preceding claims, **characterised in that** the water of the temporarily flowable self-compacting filling building material (10) comprises a mass percentage in the region of 10 to 30 percent per mass.

9. Underground line bedding material (9) of one of the preceding claims, **characterised in that** the temporarily flowable self-compacting building material (10) comprises an additive of at least one phase changing material.

10. Underground line bedding material (9) of claim 9, **characterised in that** the additive of at least one phase changing material has a mass percentage of a maximum of 10 percent per mass (related to the aggregate).

11. Underground line bedding material (9) of one of the preceding claims, **characterised in that** the temporarily flowable self-compacting filling building material (10) comprises an additive of at least one humidity binding material.

12. Underground line section comprising
a) an excavated duct (3),
b) an underground line bedding material (9) of one of the preceding claims arranged in the excavated duct (3), at least one underground line (7a - 7f) being embedded in the temporarily flowable self-compacting filling building material (10), and
c) a filling (11) with excavated soil, preferably a trench tape or a trench plate (13) being arranged between the temporarily flowable self-compacting filling building material (10) with the underground line (7a, 7f) embedded therein and the filling (11) of excavated soil arranged thereabove.

## Revendications

1. Matériau de ballast de raccordement à la terre (9), qui est constitué d'un matériau de remblayage auto-compactant temporairement fluide (10), qui
a) comprend au moins un matériau de construction et/ou un matériau de sol, dans lequel le matériau de sol est tamisé pour la sélection des fractions de grains adaptées de façon à ce que le matériau de construction soit mis à disposition séparément avec des groupes de grains définis ou des granulométries de façon à ce que la granulométrie soit au maximum de 16 mm,
b) comprend au moins un additif pour le contrôle de la consistance et/ou de la stabilisation du comportement de prise,
c) comprend au moins un liant,
d) comprend de l'eau
e) présente une conductivité thermique d'au moins 1 W/(mK) avec 5 % en masse d'humidité et/ou une conductivité thermique d'au moins 2 W/(mK) avec 15 % en masse d'humidité,
f) dans l'état non lié, est fluide, auto-compactant et résistant au mélange et
g) dans l'état lié, présente une capacité de nouvelle excavation, est stable en volume et est praticable après 48 heures maximum et
h) le matériau de remblayage auto-compactant temporairement fluide présente une ligne de tamisage qui est calculée avec l'équation de Fuller avec A = 100 * (d/D)ⁿ à l'aide des exposants n = 0,1 à n = 0,7 et avec le grain le plus gros D de 16 mm maximum.

2. Matériau de ballast de raccordement à la terre (9) selon la revendication 1, **caractérisé en ce que** le liant du matériau de remblayage auto-compactant temporairement fluide (10) présente une part de masse de 6 % en masse au maximum.

3. Matériau de ballast de raccordement à la terre (9) selon l'une des revendications précédentes, **caractérisé en ce que** l'au moins un matériau de construction et/ou le matériau de sol du matériau de remblayage auto-compactant temporairement fluide (10) présente une part de masse d'au moins 60 % en masse.

4. Matériau de ballast de raccordement à la terre (9) selon l'une des revendications précédentes, **caractérisé en ce que** le matériau de remblayage auto-compactant temporairement fluide (10) comprend un additif d'au moins un matériau thermo-conducteur.

5. Matériau de ballast de raccordement à la terre (9) selon la revendication 4, **caractérisé en ce que** l'additif d'au moins un matériau thermo-conducteur est constitué de graphite, de copeaux de métal, de cendre, de charbon et/ou de carbure de silicium.

6. Matériau de ballast de raccordement à la terre (9) selon la revendication 4 ou 5, **caractérisé en ce que** l'additif d'au moins un matériau thermo-conducteur comprend une part de masse de 10 % en masse maximum (par rapport à la granulométrie de la roche).

7. Matériau de ballast de raccordement à la terre (9) selon l'une des revendications 4 à 6, **caractérisé en ce que** le matériau de ballast de raccordement à la terre présente, après l'ajout de matériaux thermo-conducteurs, une conductivité thermique de
a) au moins 2 W/(mK) avec 5 % en masse d'humidité et/ou
b) au moins 3 W/(mK) avec 15 % en masse d'humidité.

8. Matériau de ballast de raccordement à la terre (9) selon l'une des revendications précédentes, **caractérisé en ce que** l'eau du matériau de remblayage auto-compactant temporairement fluide (10) présente une part de masse de l'ordre de 10 à 30 % en masse.

9. Matériau de ballast de raccordement à la terre (9) selon l'une des revendications précédentes, **caractérisé en ce que** le matériau de remblayage auto-compactant temporairement fluide (10) présente un ajout d'au moins un matériau à changement de phase.

10. Matériau de ballast de raccordement à la terre (9) selon la revendication 9, **caractérisé en ce que** l'ajout d'au moins un matériau à changement de phase présente une part de masse de 10 % en masse maximum (par rapport à la granulométrie de la roche).

11. Matériau de ballast de raccordement à la terre (9) selon l'une des revendications précédentes, **caractérisé en ce que** le matériau de remblayage auto-compactant temporairement fluide (10) présente un ajout d'au moins un matériau absorbant l'humidité.

12. Zone de raccordement à la terre avec
a) un canal de déblais (3),
b) un matériau de ballast de raccordement à la terre (9), disposé dans le canal de déblais (3b), selon l'une des revendications précédentes, dans lequel, dans le matériau de remblayage auto-compactant temporairement fluide (10), est intégré au moins un raccordement à la terre (7a - 7f) et
c) un remplissage (11) avec des déblais, dans lequel, de préférence, entre le matériau de remblayage auto-compactant temporairement fluide (10) avec le raccordement à la terre (7a - 7f) intégré à l'intérieur et le remplissage (11) disposé au-dessus avec les déblais, est disposée une bande de tracé ou une plaque de tracé (13).
